# EUROPÄISCHE PATENTANMELDUNG

(11) **EP 4 123 743 A1**
(43) Veröffentlichungstag der Anmeldung: **25.01.2023**
(21) Anmeldenummer: 22178914.2
(22) Anmeldetag: 14.06.2022
(51) Int. Cl.: H01M 4/00

(54) **VERWENDUNG VON ELEKTRISCH LEITFÄHIGEN PROTEINEN ALS LEITADDITIV IN EINER ELEKTRODENPASTE**

(30) Priorität: 23.06.2021 DE 102021206479
(71) Anmelder: VOLKSWAGEN AG, 38440 Wolfsburg (DE)
(72) Erfinder: JAMADAR, Kartik, 38442 Wolfsburg (DE)
(74) Vertreter: FDST Patentanwälte

(57) **Zusammenfassung**

Die Erfindung betrifft eine Verwendung von elektrisch leitfähigen Proteinen als Leitadditiv in einer Elektrodenpaste (10), wobei als Proteine Pili (22) von Bakterien (32) benutzt werden.

## Beschreibung

Die Erfindung betrifft eine Verwendung von elektrisch leitfähigen Proteinen als Leitadditiv in einer Elektrodenpaste. Die Erfindung betrifft weiterhin drei Herstellungsverfahren für eine solche Elektrodenpaste.

Elektrisch beziehungsweise elektromotorisch angetriebene oder antreibbare Kraftfahrzeuge, wie beispielsweise Elektro-, Hybrid, Plug-In- oder Brennstoffzellenfahrzeuge, umfassen in der Regel einen Elektromotor, mit dem eine oder beide Fahrzeugachsen antreibbar sind. Zur Versorgung mit elektrischer Energie ist der Elektromotor üblicherweise an eine fahrzeuginterne (Hochvolt-)Batterie als elektrischen Energiespeicher angeschlossen.

Unter einer insbesondere elektrochemischen Batterie ist hier und im Folgenden insbesondere eine sogenannte sekundäre Batterie (Sekundärbatterie) des Kraftfahrzeugs zu verstehen. Bei einer solchen (sekundären) Fahrzeugbatterie ist eine verbrauchte chemische Energie mittels eines elektrischen (Auf-)Ladevorgangs wiederherstellbar. Derartige Fahrzeugbatterien sind beispielsweise als elektrochemische Akkumulatoren, insbesondere als Lithium-Ionen-Akkumulatoren, ausgeführt.

Zur Erzeugung oder Bereitstellung einer ausreichend hohen Betriebsspannung weisen solche Fahrzeugbatterien typischerweise mindestens ein Batteriemodul (Batteriezellmodul) auf, bei welchem mehrere einzelne Batteriezellen modular verschaltet sind. Alternativ ist ein sogenanntes Cell2Pack-Design möglich, bei welchem die Batteriezellen direkt zu der Fahrzeugbatterie zusammengeschaltet, insbesondere parallelgeschaltet, und nicht vorab zu Modulen zusammengefasst werden.

Batterien der genannten Art weisen auf einer Batteriezellebene eine Kathode und eine Anode sowie einen Separator und einen Elektrolyten auf. Die Elektroden, also die Anode sowie die Kathode, sind aus einem jeweiligen (Elektroden-)Aktivmaterial hergestellt. Das Aktivmaterial ist hierbei Voraussetzung für eine leistungsstarke Batterie. Zur Verbesserung der elektrischen Eigenschaften sind die Aktivmaterialien häufig mit Leitpartikeln als Leitadditiv oder Leitmittel versetzt. Kohlenstoffbasierte Leitpartikel, beispielsweise ein Leitruß oder ein Leitgraphit, sind aufgrund ihrer hohen Leitfähigkeit ein wichtiger Bestandteil von Lithium-Ionen-Batterien, welche die Übertragung von Elektronen zum und vom Aktivmaterial unterstützen, und somit den Elektrodenwiderstand, also den Innenwiderstand der Batterie, reduzieren.

Zur Herstellung von Batterien sind Extrusionsverfahren möglich, bei welchen die Elektroden der Batteriezellen aus einer plastischen Masse hergestellt werden, welche aus einem Düsenelement gepresst (extrudiert) wird. Durch die Integration eines kontinuierlichen Extrusionsprozesses in die Lithium-Ionen-Batteriezellfertigung ist es aufgrund der hohen Effizienz des Mischprozesses möglich, die Prozesszeit und den Energiebedarf bei der Herstellung von Batterien deutlich zu reduzieren. Die Elektroden der Batterie bzw. der Batteriezellen werden hierbei mittels extrudierten Elektrodenpasten hergestellt, wobei die Pastenqualität über spezifische Kriterien oder Produktkenngrößen bestimmt ist, beispielsweise über eine Partikelgröße der Leitpartikel. Die Elektrodenpasten werden anschließend beispielsweise auf einen jeweiligen Stromableiter, insbesondere auf eine Kupfer- oder Aluminiumfolie, aufgetragen.

Von einem Leitadditiv für Elektrodenpasten sind insbesondere folgende Eigenschaften gewünscht:
- eine hohe elektrische Leitfähigkeit, welche beispielsweise vergleichbar zu Kohlenstoff-Nanoröhrchen ist. Vorzugsweise weist das Leitadditiv hierbei einen spezifischen Widerstand von 1 Ohm cm oder weniger auf;
- eine kleine Partikelgröße von etwa 10 nm und eine große (Partikel-)Länge von etwa 1 µm für eine große Reichweite der Leitfähigkeit;
- eine einfache Dispersion in dem Aktivmaterial ohne zu große Scherbeanspruchung (Misch-Drehzahlen);
- wirtschaftlich und leicht in Massenmengen zu entwickelbar;
- keine Gesundheitsgefährdung, also keine giftigen oder toxischen Eigenschaften;
- eine hohe Ölabsorptionszahl (OAN) um eine möglichst hohe Elektrolytabsorption zu gewährleisten;
- bereits ein geringer Anteil sollte ausreichen, um eine hohe Leitfähigkeit im Elektrodenpastenmaterial zu erreichen. Dadurch wird eine hohe Energiedichte gewährleistet.
- einen möglichst geringen Anteil an metallischen Verunreinigungen;
- eine geringe Feuchtigkeits- und Gasaufnahme, und einen geringen Bindemittel- und Lösungsmittelverbrauch. Weiterhin sollte für eine einfache Beschichtung ein hoher Feststoffgehalt bei niedriger Viskosität gegeben sein; und
- eine gute Oxidationsbeständigkeit.

Es ist schwierig die vorstehend geforderten Eigenschaften in einem einzigen Produkt zu erreichen. Daher ist die derzeitige industrielle Lösung die Kombination von Leitruß, kompressiblem porösem Graphit, Kohlenstoff-Nanoröhrchen und Graphen zu verwenden. Leitadditive aus Kohlenstoff, wie insbesondere Leitruß (z.B. Carbon Black, Kohlenstoffschwarz), weisen jedoch in der Anwendung bei Elektrodenpasten eine Anzahl von Problemen auf.

Ein Problem von leitenden Kohlenstoff ist der hohe elektrische spezifische Widerstand um 0,25 Ohm cm (Ohm Zentimeter), was zu einem hohen Innenwiderstand und Spannungsabfall innerhalb der Batteriezelle führt. Der Elektrodenwiderstand kann hierbei beispielsweise in Einheiten von Ohm/cm² (Ohm pro Quadratzentimeter) gemessen werden, und liegt in der Regel zwischen 70 Ohm/cm² und 250 Ohm/cm², je nach Kohlenstoffgehalt. Der spezifische Widerstand ist somit viel höher als bei einem Metall. Da Metalle jedoch nicht als Leitmittel verwendet werden können, ist die einzig verfügbare Auswahl ein Nichtmetall wie Kohlenstoff als Leitmittel.

Leitfähige Zusätze sollten eine möglichst geringe Oberfläche aufweisen, um die Leitfähigkeit zu verbessern. Andererseits beeinflusst die Oberfläche die rheologische Kurve. Ein zusätzliches Problem von leitfähigen Zusätzen besteht somit in der Vergrößerung der Oberfläche des Elektrodenpastenmaterials, wodurch die Viskosität der Elektrodenpaste erhöht wird. In der Folge wird der Extrusionsprozess nachteilig beeinflusst. Dieses Problem tritt typischerweise bei Leitruß mit geringer Partikelgröße auf, welcher beispielsweise in Elektrodenpasten für Hochenergiebatterien verwendet wird.

Ein weiteres Problem von leitfähigem Kohlenstoff ist, dass er in Form von Agglomeraten oder Aggregaten vorliegt, welche jeweils eine große Oberfläche aufweisen. Die Brunauer-Emmett-Teller (BET)-Oberfläche von Agglomeraten beträgt beispielsweise 63 m²/g (Quadratmeter pro Gramm) und kann mit abnehmender Partikelgröße auf bis zu 130 m²/g ansteigen. Mit zunehmender Oberfläche nimmt nachteiligerweise die Oxidationsrate zu. Höhere Aggregatlängen sind jedoch erwünscht, damit die Verbindung bei einer (thermischen) Ausdehnung der Batteriezelle beziehungsweise Batterieelektrode nicht verloren geht.

Weiterhin weist Leitruß das Problem auf, dass die große Oberfläche ein Risiko der Absorption von Dämpfen und/oder Gasen birgt, was sich wiederum auf die anwendungsrelevanten Eigenschaften der Elektrodenpaste auswirkt. Es wird daher empfohlen, Leitruß stets frei von potentiellen Verunreinigungen und Verschmutzungsquellen zu lagern. Die Lagertemperaturen sollten hierbei 50 °C (Grad Celsius) nicht überschreiten. Leitruß sollte daher unter kühlen und trockenen Bedingungen gelagert werden, wodurch die Lagerkosten nachteilig erhöht werden.

Ein weiteres Problem bei Kohlenstoffschwarz mit einer hohen BET-Oberfläche ist der hohe Bindemittellösungsbedarf. Je höher die Oberfläche mit leitendem Kohlenstoffschwarz ist, desto mehr Bindemittel und Lösungsmittel wird benötigt. Dadurch wird die Energiedichte der Elektrodenpaste beziehungsweise der Batterieelektrode reduziert.

Ein zusätzliches Problem des Leitrußes ist das Vorhandensein von metallischen Verunreinigungen, insbesondere von Eisen, die minimal sein sollten. Metallische Verunreinigungen der Leitadditive beziehungsweise Elektrodenpaste sind wegen der Oxidationsgefahr und der Gefahr von elektrischen Kurzschlüssen besonders sicherheitsrelevant für die Anwendung in Batterieelektroden. Es gibt verschiedene Quellen für Kohlenstoffruß. Ofenruß (Brennkohlenstoff) weist einen höheren Anteil an metallische Verunreinigungen auf, als Acetylenruß. Acetylenruß weist in der Regel einen Anteil von Eisen und andere Schwermetallanteile unter 5 ppm (Parts per Million). Nachteiligerweise ist acetylenbasierter leitfähiger Kohlenstoff ohne Verunreinigungen besonders kostenintensiv.

Ein zusätzliches Problem entsteht aufgrund des geringen Seitenverhältnis (Länge zu Durchmesser) von Leitruß-Aggregaten. Typischerweise beträgt der Abstand zwischen den Leitpartikeln etwa 40 nm (Nanometer). Wenn der mittlere Abstand zwischen dem Aktivmaterial nach einer Anzahl von Zyklen um mehr als die Länge des Leitpartikels erhöht wird, wird die elektrische Leitfähigkeit unterbrochen. Dies reduziert die Lebensdauer der Batterie.

Zur Lösung der vorstehenden Probleme wird beispielsweise der Anteil des Leitrußes erhöht, um die Leitfähigkeit zu verbessern. Normalerweise kann der Rußgehalt zwischen 1 % und 4 % variieren, wobei eine Erhöhung des Rußgehalts die Leitfähigkeit verbessert. Eine Erhöhung des Rußgehalts erhöht jedoch auch den Bedarf an Bindemittel und Lösungsmittel, und verringert die Energiedichte.

Eine kleine Kohlenstoffpartikelgröße erfordert eine hohe Kompression im Kalandrierungsprozess bei der Elektrodenherstellung, um elektrische Verbindungen von dem Leitadditiv zum Aktivmaterial herzustellen. Eine hohe Kompression verringert wiederum die Porosität, die für die elektrische Diffusion erforderlich ist. Um diesen Verlust der Porosität zu kompensieren wird als weitere Lösung beispielsweise poröses, hochkomprimierbares (kompressibles), Graphit (Porocarb) sowohl in der Anode als auch in der Kathode im gleichen Verhältnis wie Leitruß beigefügt.

Das Graphit ermöglicht hierbei Elektroden mit hoher Dichte und ausreichender Porosität für die Elektrolytdiffusion. Die Kombination von kompressiblem Graphit und leitfähigem Kohlenstoff erhöht die Leitfähigkeit der Elektrodenpaste durch zusätzliche elektrische Verbindungen mit dem Aktivmaterial. Komprimierbarer Graphit wird normalerweise dem Aktivmaterial der Kathode zugesetzt. Nachteiligerweise wird durch die Beifügung von Graphit die Kosten erhöht sowie die Energiedichte reduziert.

Eine weitere Lösung ist Leitruß aus Acetylen mit strikt kontrollierten Metallverunreinigungen (Fe, Co, Ni, Mn, Cr und Cu), Schwefelverunreinigungen und Aschegehalt. Strikt kontrollierte Verunreinigungen und Acetylen als Rußquelle sind billiger als Brennkohlenstoff (mit hohen Verunreinigungen).

Eine zusätzliche Lösung besteht in einer verbesserten Dispergierbarkeit der Leitpartikel. Hierzu werden beispielsweise Trockenmischungen (engl.: dry mixing) und Nassmischungen (engl.:wet mixing) mit unterschiedlichen Drehzahlen (Scherbelastungen) entweder im Batchmischen oder in der Extrusion durchgeführt. Die Dispergierbarkeit von Kohlenstoffruß hängt von der Partikelgröße und der Oberfläche ab. Kleinere Partikel erfordern eine geringere Dispergierbarkeit. Eine gute Dispergierbarkeit korrespondiert hierbei mit einer gleichmäßigen Leitfähigkeit der Elektrodenpaste.

Eine weitere Lösung besteht beispielsweise in der Verwendung von Leitruß mit einer hohen Kristallinität und besserer Partikelgrößengleichmäßigkeit anstelle von semikristallinem Kohlenstoff. Dadurch wird eine bessere Leitfähigkeit und mehr Verbindungspunkte mit dem aktiven Material ermöglicht. Weiterhin werden weniger Hitzespots in der Batterieelektrode bewirkt, wodurch die Lebensdauer erhöht wird. Nachteiligerweise ist kristalliner leitfähiger Kohlenstoff vergleichsweise kostenintensiv.

Anstelle von Leitruß gibt es weitere Leitadditive, welche zur Erzielung einer besseren Leitfähigkeit verwendet werden können.

Eine Alternative besteht beispielsweise in der Verwendung von faden- oder filamentförmigen Kohlenstoff-Anordnungen, wie beispielsweise Kohlenstoff-Nanoröhrchen (engl.: carbon nano tubes, CNT) oder Kohlenstofffasern (engl.: carbon fiber), welche in der Regel in Kombination mit Leitruß als Leitadditive verwendet werden.

Beispielsweise werden Kohlenstoff-Nanoröhrchen alternativ oder zusätzlich zum Leitruß verwendet. Kohlenstoff-Nanoröhrchen können einwandig oder mehrwandig sein, wobei mehrwandige Kohlenstoff-Nanoröhrchen eine höhere Leitfähigkeit aufweisen. Der Vorteil von Kohlenstoff-Nanoröhrchen ist, dass die Röhrchen einen kleineren Durchmesser um 10 nm und eine große (axiale) Länge von etwa 1,5 µm (Mikrometer) aufweisen. Durch die hohe Länge bleibt die Verbindung zwischen aktivem Material auch dann aufrechterhalten, wenn sich der Abstand zwischen den Materialien während einer Zellexpansion vergrößert. Kohlenstoff-Nanoröhrchen realisieren somit eine elektrische Leitfähigkeit über einen großen Bereich beziehungsweise über große Längen, so dass die Leitfähigkeit auch als Linie-zu-Punkt-Leitfähigkeit bezeichnet wird.

Kohlenstoff-Nanoröhrchen weisen eine hohe Leitfähigkeit auf, welche mehr als doppelt so hoch ist wie die von Leitruß. Der spezifische elektrische Widerstand von Kohlenstoff-Nanoröhrchen liegt bei 5 Ohm cm bis 10 Ohm cm. Somit werden lediglich 1 % Kohlenstoff-Nanoröhrchen benötigt, um die gleiche Leitfähigkeit zu erreichen wie mit 3 % bis 4 % Leitruß.

Eine weitere Alternative ist beispielsweise die Verwendung von Graphen (Leitgraphen, Leitgraphit) als Leitadditiv. Graphen weist eine blattähnliche Leitfähigkeitsstruktur auf, und bietet eine noch höhere Leitfähigkeit als blanker Kohlenstoff und Kohlenstoff-Nanoröhrchen. Aufgrund der blattähnlichen Leitfähigkeitsstruktur wird die Leitfähigkeit auch als Fläche-zu-Fläche-Leitfähigkeit bezeichnet wird. Graphen wird meist in Kombination mit Kohlenstoff-Nanoröhrchen und Leitruß verwendet, um eine größere elektrische Leitfähigkeit zu erzielen. Graphen wird hauptsächlich als Zusatz zu Leitruß und kompressiblem Graphit verwendet. Der Zusatz von Graphen hilft hierbei den Rußgehalt zu verringern und erhöht damit die Energiedichte der Elektrodenpaste beziehungsweise der Elektrode.

Sowohl Graphen als auch Kohlenstoff-Nanoröhrchen haben eine hohe elektronische Leitfähigkeit, jedoch weisen diese Leitadditive vergleichsweise hohe Kosten auf. Weiterhin bestehen Probleme hinsichtlich einer gleichmäßigen oder uniformen Dispersion innerhalb des Elektrodenpastenmaterials. Des Weiteren weisen Graphen und Kohlenstoff-Nanoröhrchen eine geringere OAN-Zahl (Ölabsorptionszahl, engl.: Oil Absorption Number) als Leitruß auf, wodurch diese Materialien eine geringere Elektrolytabsorption aufweisen, so dass der Ladewiderstand (Lithium-Ionen) erhöht ist.

Der Erfindung liegt die Aufgabe zugrunde, ein neues Leitadditiv anzugeben, welches die vorstehend genannten wünschenswerten Eigenschaften aufweist. Insbesondere soll hierbei eine besonders geeignete Verwendung von elektrisch leitfähigen Proteinen als Leitadditive in einer Elektrodenpaste angegeben werden. Der Erfindung liegt weiterhin die Aufgabe zugrunde, Verfahren zur Herstellung einer Elektrodenpaste mit einem solchen Leitadditiv anzugeben. Der Erfindung liegt ferner die Aufgabe zugrunde, eine besonders geeignete Batteriezelle anzugeben.

Hinsichtlich der Verwendung wird die Aufgabe mit den Merkmalen des Anspruchs 1 und hinsichtlich des Verfahrens mit den Merkmalen einer der Ansprüche 3, 5, oder 6 sowie hinsichtlich der Batteriezelle mit den Merkmalen des Anspruchs 10 erfindungsgemäß gelöst. Vorteilhafte Ausgestaltungen und Weiterbildungen sind Gegenstand der Unteransprüche. Die im Hinblick auf die Verwendung angeführten Vorteile und Ausgestaltungen sind sinngemäß auch auf die Verfahren und/oder die Batteriezelle übertragbar und umgekehrt.

Erfindungsgemäß werden elektrisch leitfähigen Proteinen als Leitadditiv in einer Elektrodenpaste verwendet, wobei als Proteine insbesondere Pili von Bakterien, vorzugsweise von gramnegativen anaeroben Bakterien, benutzt werden. Dadurch ist ein besonders geeignetes Leitadditiv für die Elektrodenpaste realisiert. Die (Bakterien-)Pili können hierbei als einzelnes Leitadditiv oder in Kombination mit einem Leitruß verwendet werden, um eine elektrische Leitfähigkeit der Elektrodenpaste zu realisieren, welche vergleichbar mit einem Metall ist.

Unter einer Elektrodenpaste ist hier und im Folgenden insbesondere eine Suspension oder Aufschlämmung (engl.: Slurry) aus einem (Elektroden-)Aktivmaterial und einem Binder (Bindemittel) sowie dem Leitadditiv zu verstehen.

Unter einem Pilus (Plural: Pili, auch Fimbrien genannt) ist ein außerhalb der Bakterienzelle als Zellfortsatz befindliches, fadenförmiges, aus einem Protein bestehendes faden- oder haarförmiges Anhängsel zu verstehen.

Die Elektrodenpaste wird beispielsweise zur Herstellung von Kondensatoren, Brennstoffzellen oder elektrisch leitfähigem Kleber oder Elastomer verwendet. Vorzugsweise ist die Elektrodenpaste zur Herstellung einer Batterieelektrode für eine Batteriezelle, insbesondere einer Lithium-Ionen-Batteriezelle, vorgesehen. Die Elektrodenpaste wird hierbei insbesondere als Extrudat in einem Extrusionsprozess mittels eines Extruders auf einen Ableiter extrudiert.

Die Erfindung geht von der Erkenntnis aus, dass leitfähige Proteine einzeln oder in Kombination mit Leitruß verwendet werden können, um eine bessere Leitfähigkeit als die Kombination von Leitruß und Kohlenstoff-Nanoröhren zu realisieren. Die Aminosäure, welche im Protein enthalten ist, weist eine gute Leitfähigkeit auf.

Synthetische Protein sind vergleichsweise kostenintensiv in der Herstellung, jedoch gibt es in der Natur viele Mikroben, welche leitfähige Proteine aufweisen. In der Regel weisen gramnegativen Bakterien leitfähige Proteine in Form von Pili auf. Die Pili bestehen aus sehr leitfähigem Protein (aromatische Aminosäuren) und haben einen spezifische Widerstand von etwa 1 Ohm cm. Bakterien wie Pseudomonas aeruginosa (P. aeruginosa), Shewanella oneidensis, Geobacter sulfurreducens, et cetera weisen geeignete Pili auf. Die Pili weisen beispielsweise einen Durchmesser von etwa 12 bis 16 nm und eine Länge von etwa 800 nm auf, so dass die Pili effektiv wie Nanoröhrchen oder Nanodrähte ausgebildet sind. Die elektronische Langstreckenleitfähigkeit ist hierbei besser als Kohlenstoff-Nanoröhrchen

Des Weiteren weisen die Pili eine maximale Rauigkeit von 5 nm auf. Die raue Oberfläche bietet hierbei mehr Platz für die Anheftung mit anderen Pili oder Nanofasern und schafft eine hohe Länge von miteinander verbundenen bakteriellen Nanoröhren oder bakteriellen Nanofasern. Die Rauheit von Nanodrähten ist wichtig, weil sie eine Rolle bei der effizienten Oberflächenbindung mit anderen Materialien spielt.

Natürliche leitfähige Proteine in Form von Bakterienpili können in Masse bei Raumtemperatur aus kostengünstigen, erneuerbaren Rohstoffen in Bioreaktoren mit wesentlich geringerem Energieaufwand hergestellt werden. Insbesondere ist das Endprodukt hierbei frei von toxischen oder gesundheitsschädlichen Komponenten.

Die Pili übertragen nicht lediglich Elektronen auf die Elektrode und das aktive Aktivmaterial, sondern speichern auch Elektronen auf ihrer Oberfläche. Dies bedeutet, dass Pili als lokale Kondensatoren in Elektroden wirken können. Diese Elektronen können freigesetzt werden, wenn beispielsweise eine hohe C-Rate der Batterie benötigt wird.

Erfindungsgemäß wird somit die Leitfähigkeit der Elektrode durch Nutzung der Leitfähigkeit von gramnegativen anaeroben Bakterien und deren Pili verbessert. Erfindungsgemäße werden somit bakterielle Pili als Leitmittel oder Leitadditiv verwendet. Bakterielle Pili können eine hohe elektrische Leitfähigkeit im Elektrodenpastenmaterial erzeugen. Die Pili können hierbei als einzelnes Leitadditiv genutzt werden. Vorzugsweise werden die Pili in Kombination mit einem Leitruß eingesetzt, wobei das Leitruß zusätzlich eine Lithium-Ionen-Übertragung unterstützt.

Durch die Verwendung von Bakterienpili als Leitadditiv wird die Leitfähigkeit einer mittels der Elektrodenpaste hergestellten Elektrode verbessert. Dies bedeutet, dass die Elektrode einen geringeren Spannungsabfall aufweist. Des Weiteren sind Pili durch kultivierende Bakterienkultur einfach und aufwandsarm herstellbar. Somit weisen Pili geringere Herstellungskosten als Graphen oder Kohlenstoff-Nanoröhrchen auf, so dass eine besonders kostengünstige Elektrodenpaste realisiert ist. Des Weiteren ist eine gleichmäßige Dispersion der leitfähigen Bakterien beziehungsweise Pili bei einer Trockenmischung oder einer direkten Inkubation in Graphit realisierbar. Bakterienpili weisen weiterhin keine metallischen Verunreinigungen auf.

Durch den Einsatz von Bakterienpili ist eine besonders hohe Energiedichte der Elektrode realisierbar, da ein Ruß- und Bindemittelanteil reduziert wird. Weiterhin sind hohe Kapazitätsentladungsrate (C-Rate) durch den Kondensatoreffekt der Pili zum Halten von Elektronen möglich. Da die Pili aufgrund ihrer Oberflächenrauigkeit an anderen Pili haften, ist weiterhin eine langreichweitige elektrische Beschichtung möglich.

Zur Trennung oder Separierung der Pili vom Rest der Bakterienzelle sind einfache und kostengünstige mechanische Trennverfahren möglich. Alternativ können auch die Bakterien mit Pili als leitende Nanoröhre verwendet werden, so dass es nicht notwendig ist, die Pili vom Rest der Bakterien zu trennen. Bakterien, welche als leitfähiges Nanoröhrchen verwendet werden, sind gesundheitlich unbedenklich. Nach einem Trocknungsprozess in der Beschichtungsanlage sind die Bakterien in der festen Aufschlämmung beziehungsweise in der festen Elektrodenpaste tot. Hierbei ist es zusätzlich möglich, die Elektrode mit UV-Strahlen oder Plasma Reinigungsprozess zu unterziehen, um das Bakterienwachstum in der Elektrode zu stoppen. Im Gegensatz zu biologischen oder mikrobiellen Elektroden sind die Bakterien im fertigen Produkt erfindungsgemäß tot oder biologisch inaktiv. Auch nach dem Zelltod sind die Bakterien mit ihren Pili elektrisch leitfähig.

Die Prozesse zur Bearbeitung oder Verarbeitung der Elektrodenpaste, wie Trockenmischen, Nassmischen, Entgasen, Nassbeschichten des Substrats und abschließendes Trocknen sind bei der erfindungsgemäßen Elektrodenpaste die gleichen, wie bei einer konventionellen Elektrodenentwicklung.

Zur Verwendung von Bakterienpili als Leitadditiv in einer Elektrodenpaste sind unterschiedliche Prozesse denkbar. Nachfolgend sind drei erfindungsgemäße Verfahren zur Herstellung einer solchen Elektrodenpaste näher erläutert, bei welchen die leitfähige Pili mit aktivem Material von Kathode und/oder Anode gemischt werden, um eine hohe elektrische Leitfähigkeit zu erreichen.

Die Inkubation von Bakterien erfordert eine gute Kontrolle von Temperatur, pH-Wert, Sauerstoffabwesenheit und Ernährung. Die Inkubation der Bakterien erfolgt vorzugsweise unter Stickstoffatmosphäre.

In einem ersten Verfahren werden die Pili durch mechanische Abtrennung abgetrennt und dann dem aktiven Material zugeführt. In einem zweiten und dritten Verfahren werden die Bakterien beispielsweise in Graphit (aktives Material der Elektrode) inkubiert und gezüchtet. Pili sind bessere Leiter als der Rest der Bakterienzelle, jedoch wird durch die Anbindung an die Batteriezellen, deren mechanische Stabilität erhöht. Die Kombination von Pili und Bakterienzellen ermöglicht größere Länge von leitenden Röhren, welche die Länge von Kohlenstoff-Nanoröhrchen übertrifft.

Um das Wachstum der Bakterien zu beschleunigen, werden dem Graphit beispielsweise Glukose und Nitrat zugesetzt. Ein während des Bakterienwachstums entstehender Alkohol wird hierbei vorzugsweise verdampft.

Für das zweite und dritte Verfahren ist bei der Anwendung der Elektrodenpaste beispielsweise ein zusätzlicher Prozess mit UV-Strahlen oder kalter Plasmareinigung notwendig, um die Bakterien nach einem Trocknen der Elektrodenpaste vollständig abzutöten.

Nachfolgend werden die drei erfindungsgemäßen Herstellungsverfahren näher erläutert.

Bei dem ersten Verfahren zur Herstellung einer Elektrodenpaste wird zunächst eine Bakterienkultur von Bakterien mit elektrisch leitfähigen oder konduktiven Pili inkubiert. Beispielsweise werden die Bakterien hierbei in einem Inkubator inkubiert. Anschließend werden die Bakterien in Salzwasserlösung (Kochsalzlösung) gegeben und einem Vibrations- und Zentrifugationsprozess unterzogen. In der Salzwasserlösung werden die Pili mechanisch, vorzugsweise mittels Vibration, von den Bakterienzellen abgetrennt. Während eines nachfolgenden Zentrifugationsprozesses werden die abgetrennten Pili, die ein geringes Gewicht als die Zellkörper der Bakterien aufweisen, in der Mitte gesammelt und abgefiltert. Im Zuge der Filterung werden weiterhin kurze oder gebrochene Pili abgetrennt. Schließlich werden die Pili mit destilliertem Wasser gewaschen oder gereinigt. Die Pili weisen hierbei einen Durchmesser von circa 15 nm und eine Länge von etwa 400 nm bis 800 nm auf. Die Pililänge hängt hierbei vom mechanischen Trennverfahren ab, wobei eine möglichst große Länge der Pili für eine langreichweitige Leitfähigkeit erwünscht ist.

Anschließend werden die Pili mit einem Leitruß, insbesondere mit einem leitfähigem Kohlenstoffaggregat gemischt. Die leitfähige Bakterienpili werden hierbei in Kombination mit Leitruß verwendet, um eine Punkt-zu-Punkt- und Linien-zu-Punkt-Leitfähigkeit der Elektrodenpaste zu realisieren. Vorzugsweise werden hierbei etwa 0,5 % des Gesamtgewichts des Feststoffs in der Elektrodenpaste oder Aufschlämmung als Pili beigefügt. Mit anderen Worten weist die Elektrodenpaste 0,5 Gew.-% (Gewichtsprozent) von elektrisch leitfähigen Pili auf. Die Pili sind hierbei ein besserer Ersatz für Kohlenstoff-Nanoröhrchen, da sie eine wesentlich bessere Leitfähigkeit aufweisen. Der Anteil von elektrisch leitfähigen Kohlenstoff oder Leitruß beträgt hierbei beispielsweise zwischen 2 Gew.-% und 3 Gew.-%. Das resultierende Gemisch aus Pili und Leitruß wird anschließend mit einem Aktivmaterial (Kathoden- oder Anodenmaterial) und einem Bindemittel zu der Elektrodenpaste beziehungsweise zu dem Elektrodenpastenmaterial gemischt.

Das Bindemittel ist beispielsweise Polyvinylidenfluorid PVDF für die Kathode und Styrolbutadienkautschuk SBR für die Anode. Das Lösungsmittel ist beispielsweise Wasser (für die Anode) oder N-Methyl-2-pyrrolidon (NMP) für die Kathode. Das Aktivmaterial ist hierbei zum Beispiel Graphit für die Anode oder ein Metalloxid, insbesondere ein Lithium-Cobalt-Oxid (LCO), ein Lithium-Nickel-Mangan-Cobalt-Oxid (LNMC, NMC), ein Lithium-Eisenphosphat (LFP), ein Lithium Nickel-Cobalt-Aluminum-Oxid (NCA) oder dergleichen, für die Kathode.

Für eine gleichmäßige Verteilung von Leitruß und Pili wird zunächst ein Trockenmischen von Leitruß und Pile durchgeführt, wobei die Rauheit der Pili-Oberfläche erhöht wird, so dass der Leitruß besser daran haftet. Durch das Trockenmischen wird sichergestellt, dass der Kohlenstoff gleichmäßig auf den Pili anhaftet. Später können Binder und Lösemittel zugegeben werden, um die Leitadditive mit dem Aktivmaterial nass zu mischen. Die nasse Aufschlämmung oder Elektrodenpaste wird dann im Zuge einer Elektrodenherstellung auf ein folienförmiges Substrat (Aluminium für die Kathode und Kupfer für die Anode) aufgetragen oder extrudiert. Zum Schluss wird die (Elektrodenpasten-)Beschichtung getrocknet, um das Lösungsmittel zu entfernen. Die Pili weisen eine vergleichsweise niedrige Zugfestigkeit auf, so dass derartige Elektrodenpasten während eines Extrusionsmischprozesses möglichst mit einer niedrigen Scherbeanspruchung beansprucht werden.

Die Pili können weiterhin einer Kohlenstoff-Nanoröhrchen- und Leitrußlösung zugesetzt werden, um die elektronische Leitfähigkeit weiter zu erhöhen und die Elektronen auf der Pili-Oberfläche wie bei einem Kondensator zu halten. Dadurch erhöhen die Pili die Kapazität und die Energiedichte der Batterieelektrode.

Die im Hinblick auf das erste Verfahren angeführten Vorteile und Ausgestaltungen sind sinngemäß auch auf das zweite Verfahren übertragbar und umgekehrt.

Bei dem zweiten Verfahren zur Herstellung einer Elektrodenpaste wird eine Bakterienkultur von Bakterien mit elektrisch leitfähigen Pili in einem Graphitmaterial inkubiert, so dass die Bakterien das Graphitmaterial bedecken. Das bakterienbedeckte Graphitmaterial wird mit einem Bindemittel und einem Lösungsmittel zu einer Suspension gemischt. Die Suspension wird mit einem Aktivmaterial versetzt, und zu einer Elektrodenpaste beziehungsweise zu einem Elektrodenpastenmaterial gemischt.

Um in der Natur oder im Labor zu wachsen, benötigt ein Bakterium eine Energiequelle, eine Quelle für Kohlenstoff und andere benötigte Nährstoffe, und einen zulässigen Bereich von physikalischen Bedingungen wie Sauerstoffkonzentration, Temperatur und pH-Wert.

Bakterien werden als Organismen oder Gruppen auf Grundlage ihrer Wachstumsmuster unter verschiedenen chemischen (Nährstoff-) oder physikalischen Bedingungen klassifiziert. Zum Beispiel sind Phototrophen Organismen, welche Licht als Energiequelle nutzen, Anaerobier sind Organismen, welche ohne Sauerstoff wachsen, und Thermophile sind Organismen, die bei hohen Temperaturen wachsen. Die leitfähigen Bakterien beziehungsweise Bakterien mit leitfähigen Pili sind hauptsächlich Anaerobier.

Der Kohlenstoffbedarf der Organismen wird durch organischen Kohlenstoff (eine chemische Verbindung mit einer Kohlenstoff-Wasserstoff-Bindung) gedeckt. Eine Zugabe von Glukose hilft hierbei, das Wachstum von Bakterienkolonien exponentiell zu beschleunigen. Manchmal können auch Nitrate als Stickstoffquelle zugegeben werden. Bei dem zweiten Verfahren werden vorzugsweise heterotrophe Anaerobier in Graphit kultiviert, wobei nur wenige Kohlenstoff-Wasserstoff-Bindungen (z. B. Glukose) und ggf. Nitrate zugesetzt werden.

Der in der Kathode verwendete Graphit ist insbesondere komprimierbares oder kompressibles, poröses, Graphit (Porocarb). Der Graphitanteil macht hierbei etwa 2 % der Gesamtmasse der Kathode aus. Dies bedeutet, dass der Graphitanteil bei einer Kathoden-Elektrodenpaste etwa 2 Gew.-% beträgt. Aufgrund der hohen Porosität des Graphits wird die Bakterienkultur auch in den Poren wachsen. In der Anode kann man diesen Porocarb zusätzlich zu 2 Gew.-% verwenden. Da die Anode zu mehr als 90% aus Graphit besteht, kann der gleiche Graphit auch für das Bakterienwachstum verwendet werden.

Es ist vorteilhaft, dass während der Bakterieninkubation eine sauerstofffreie Atmosphäre aufrechterhalten wird. Dies wird aufrechterhalten, indem die Bakterieninkubation in einem Tank durchgeführt wird, in dem der Stickstoffdruck leicht über dem atmosphärischen Druck gehalten wird. Beispielsweise ist der Stickstoffdruck um 15 mbar (Millibar) bis 20 mbar größer als der Atmosphärendruck, so dass keine Luft in den Tank einzieht. Der Stickstoffdruck verhindert das Eindringen von Sauerstoff und Luft in die Inkubationslösung. Normalerweise dauert die Bakterienkultivierung etwa 16 bis18 Stunden bis zum Ende. Abfallprodukte wie Alkohol, die während des Zellwachstums entstehen, werden vor einer Weiterverarbeitung mittels eines Trocknungsprozess entfernt.

Die Bakterien bedecken den Graphit gleichmäßig und erhöhen die Leitfähigkeit, ohne ein Dispersionsproblem zu haben. Für eine gleichmäßige Dispersion ist somit kein aufwendiges Trockenmischen erforderlich.

Sobald die Bakterienkultur im Graphit gewachsen ist, werden Bindemittel und Lösungsmittel hinzugefügt und es folgt der gleiche Misch- und Beschichtungsprozess wie bei der konventionellen Batterieherstellung.

Anstelle von Pili wie in dem ersten Verfahren liegen im zweiten Verfahren die Bakterien in der Aufschlämmung beziehungsweise Elektrodenpaste vor. Die Elektrodenpaste wird typischerweise extrudiert und anschließend getrocknet. Nachdem die Aufschlämmung bei beispielsweise 100°C getrocknet wurde, um das Lösungsmittel zu entfernen, sterben die Bakterien ab. Man kann auch zusätzliche UV-Strahlen verwenden, um die Bakterien nach dem Beschichtungsprozess abzutöten. Es ist wichtig zu beachten, dass auch biologisch tote Bakterien Elektrizität leiten können, daher können tote Bakterien im aktiven Material verbleiben. Tote Bakterien bilden mit ihren Pili eine lange Kette in Form von leitfähigen Nanoröhren.

Bei dem dritten erfindungsgemäßen Verfahren zur Herstellung einer Elektrodenpaste wird eine Bakterienkultur von Bakterien mit elektrisch leitfähigen Pili mit einem Elektrodenpastenmaterial gemischt. Dies bedeutet, dass die Bakterienkultur in eine Aufschlämmung oder Suspension aus Aktivmaterial und Bindemittel sowie Lösungsmittel und gegebenenfalls weiteren Leitadditiven wie Leitruß gemischt wird. Anschließend wird die Bakterienkultur in dem Elektrodenpastenmaterial inkubiert, wobei die Bakterienkultur und das Elektrodenpastenmaterial während der Inkubation mittels einer rotierenden Spindel bewegt werden. Dabei gelten die Ausführungen im Zusammenhang mit dem ersten und/oder zweiten Verfahren sinngemäß auch für das dritte Verfahren und umgekehrt.

Hier, in der dritten Variante des Verfahrens, wird die Bakterienkultur direkt in die Aufschlämmungs-Lösung gegeben. Die Bakterien benötigen hierbei in der Aufschlämmung Kohlenstoffnahrung. Die Kohlenstoffnahrung ist beispielsweise in Form von Graphit, welches in der Anode beziehungsweise dem Aktivmaterial der Anode vorhanden ist. In der Kathode werden etwa 2 Gew.-% poröser Graphit als Bakteriennahrung hinzugefügt. Zusätzliche Glukose und eventuell Nitrate können helfen, das Wachstum der Bakterien weiter zu beschleunigen. Für die beschleunigte Inkubation wird die Suspension aus Bakterien und Elektrodenpastenmaterial beispielsweise 18 Stunden bei circa 37°C gehalten. Die Aufschlämmung wird durch eine rotierende Spindel ständig geschüttelt, um eine Sedimentation zu vermeiden. Da es sich um anaerobe Bakterien handelt, wird im Mischbehälter ein Stickstoffdruck aufrechterhalten, welcher leicht über dem Atmosphärendruck liegt.

Die Bakterienkultur entwickelt sich beispielsweise innerhalb von zwei Tagen, und verteilt sich gleichmäßig auf dem beigefügten Graphit. Auf diese Weise ist eine gleichmäßige Verteilung der Leitbakterien ohne großen Mischaufwand möglich. Während des Wachstums der Bakterienkultur und beim Mischen des aktiven Materials entstehen Gase, welche vorzugsweise durch einen Entgasungsmechanismus entfernt werden.

Die fertige Aufschlämmung beziehungsweise die Elektrodenpaste enthält noch aktive Bakterien. Sobald die Elektrodenpaste im Zuge der Weiterverarbeitung auf einem Substrat beschichtet ist, durchläuft sie verschiedene Trocknungszonen. Während einer Trocknung bei ca. 100°C wird das Lösungsmittel verdampft. Die Hitze tötet hierbei auch die Bakterien ab. Nach der letzten Trocknungszone durchläuft die Beschichtung beispielsweise eine UV-Bestrahlung oder eine kalte Plasmareinigung. Beide Prozesse können auch alle aktiven Bakterien abtöten. Obwohl die Bakterien im der fertigen Batterieelektrode tote Zellen sind, sind sie immer noch elektrisch leitfähig. Die Bakterien realisieren hierbei eine Leitfähigkeit von Punkt zu Punkt über große Entfernungen, wie bei Kohlenstoff-Nanoröhrchen.

Die Bakterien können in Kombination mit Leitruß als Leitadditiv hinzugefügt werden. Normalerweise reichen 0,5 Gew.-% Bakterien und 2 Gew.-% leitfähiger Kohlenstoff aus, um eine bessere Leitfähigkeit zu erzielen als die Kombination aus Kohlenstoff-Nanoröhrchen und Leitruß.

Die erfindungsgemäße Batteriezelle ist insbesondere als eine Lithium-Ionen-Zelle ausgeführt. Vorzugsweise ist die Batteriezelle für eine Fahrzeugbatterie, insbesondere für eine Traktionsbatterie eines elektrisch angetriebenen oder antreibbaren Kraftfahrzeugs, wie beispielsweise einem Elektro- oder Hybridfahrzeug, vorgesehen sowie dafür geeignet und eingerichtet. Die Batteriezelle weist hierbei eine Batterieelektrode auf, welche aus einer verfahrensgemäß hergestellten Elektrodenpaste hergestellt ist. Dies bedeutet, dass das Elektrodenmaterial der Batterieelektrode Bakterien und/oder Pili als Leitadditiv aufweist. Dadurch ist eine besonders geeignete Batteriezelle mit einer besonders hohen Leitfähigkeit und Energiedichte realisiert. Die im Hinblick auf die Verwendung und/oder die Verfahren angeführten Vorteile und Ausgestaltungen sind hierbei sinngemäß auch auf die Batteriezelle übertragbar und umgekehrt.

Nachfolgend sind Ausführungsbeispiele der Erfindung anhand einer Zeichnung näher erläutert. Darin zeigen in schematischen und vereinfachten Darstellungen:
- Fig. 1: ein Herstellungsverfahren für Batterieelektroden einer Batteriezelle,
- Fig. 2: ein Elektrodenpastenmaterial mit einem Aktivmaterial und mit einem Leitruß sowie mit Bakterienpili,
- Fig. 3: einen Trennungsprozess zur Separation von Pili und Bakterienkörper,
- Fig. 4: ein erstes Verfahren zur Herstellung einer Elektrodenpaste,
- Fig. 5: ein zweites Verfahren zur Herstellung einer Elektrodenpaste, und
- Fig. 6: ein drittes Verfahren zur Herstellung einer Elektrodenpaste.

Einander entsprechende Teile und Größen sind in allen Figuren stets mit den gleichen Bezugszeichen versehen.

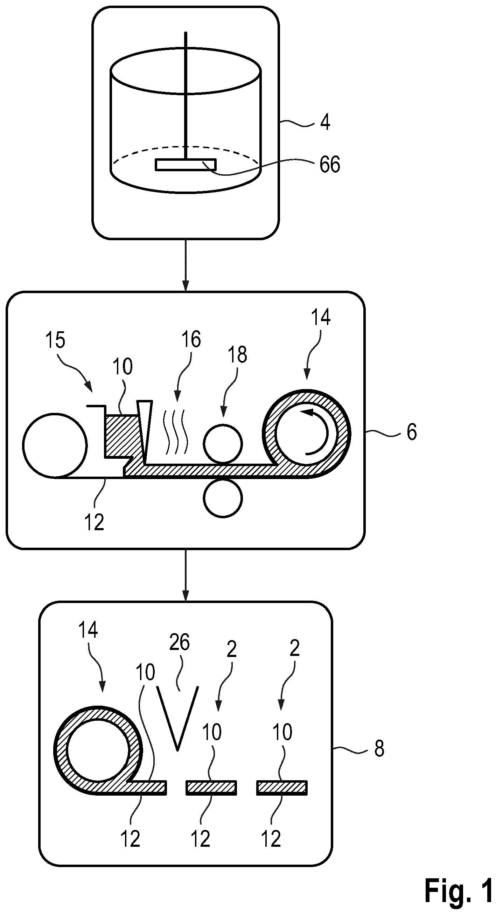

In der Fig. 1 ist in schematischer Darstellung ein Verfahren zur Herstellung einer Batterieelektrode 2 für eine nicht näher gezeigte Batteriezelle einer Fahrzeugbatterie gezeigt. Die Batteriezelle ist hierbei insbesondere eine Lithium-Ionen-Batteriezelle.

Die Herstellung erfolgt im Wesentlichen in drei Verfahrensschritten 4, 6, 8. In dem ersten Verfahrensschritt 4 wird eine Aufschlämmung (Slurry) als Elektrodenpaste 10 hergestellt.

In einem zweiten Verfahrensschritt 6 wird ein folienförmiger Stromableiter 12 mit der Elektrodenpaste 10 beschichtet, getrocknet, kalandriert und zu einem Elektrodenwickel 14 (Elektrodencoil) konfektioniert. In dem dritten Verfahrensschritt 10 wird der Elektrodenwickel 14 zu den Batterieelektroden 2 vereinzelt.

Die Elektrodenpaste 10 wird im Verfahrensschritt 6 als Beschichtung beispielsweise mittels eines Extrusionsverfahrens in einem Beschichtungs- oder Extrudierschritt 15 auf den Stromableiter 12 aufgetragen. Der Stromableiter 12 ist beispielsweise eine Kupfer- oder Aluminiumfolie. Nach der Beschichtung wird die Elektrodenpaste 10 in einem Trocknungsschritt 16 getrocknet, um beispielsweise Lösungsmittel aus der Elektrodenpaste 10 zu entfernen. Die beschichtete Elektrodenpaste beziehungsweise die Elektrodenschicht wird in einem Kalandrierschritt 18 kalandriert oder gewalzt, so dass durch die Kompression elektrische Verbindungen zwischen Leitadditiven 20, 22 zum Aktivmaterial 24 in der Elektrodenschicht hergestellt werden. Dadurch wird ein streifen- oder bandförmiges Elektrodenbandmaterial oder Elektrodensubstrat hergestellt, welches als Endlosmaterial oder Rollenmaterial, in Form des Elektrodenwickels 14 konfektioniert und im Verfahrensschritt 8 weiterverarbeitet wird.

Die Vereinzelung im Verfahrensschritt 8 erfolgt mittels einer Trennvorrichtung 16, welche beispielsweise als ein Schneid- oder Trennmessers oder als ein Laser ausgeführt ist.

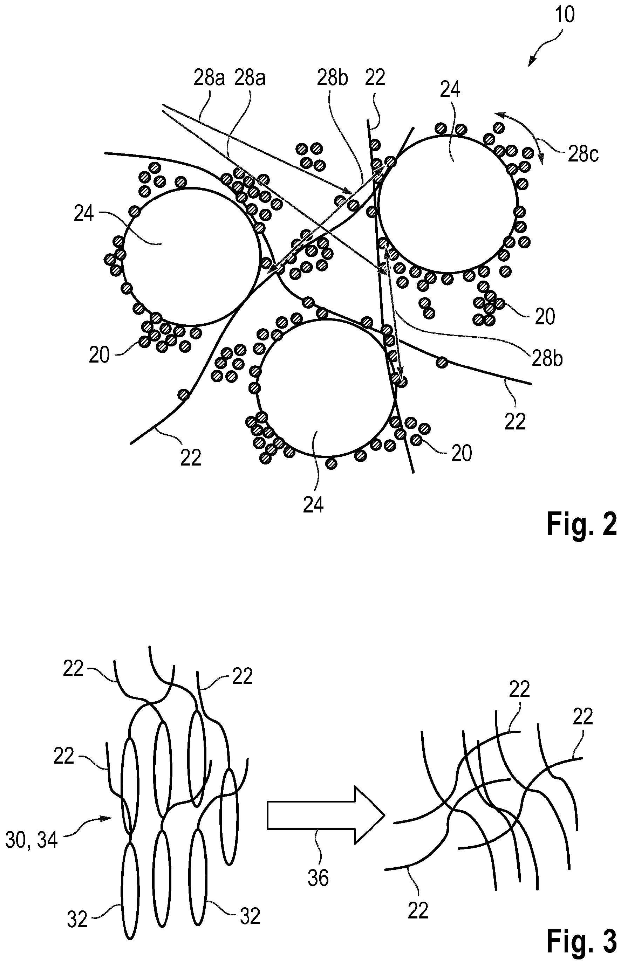

In der Fig. 2 ist schematisch ausschnittsweise die Elektrodenpaste 10 beziehungsweise die Elektrodenschicht der Batterieelektrode 2 gezeigt.

Die in Fig. 2 gezeigte Elektrodenpaste 10 weist beispielsweise LCO, insbesondere LiCoO₂, als Aktivmaterial 24 auf, wobei als Leitadditive ein Leitruß 20 (Carbon Black) und (Bakterien-)Pili 22 beigefügt sind. Das Leitruß 20 liegt in Form von Aggregaten oder Agglomeraten vor, wobei die faden- oder faserförmigen Pili 22 sich gewebe- oder filzartig zwischen dem Aktivmaterial 24 und dem Leitruß 20 erstrecken.

Die Pili 22 bestehen aus sehr leitfähigem Protein (aromatische Aminosäuren) und haben einen spezifische Widerstand von etwa 1 Ohm cm. Die Pili 22 weisen beispielsweise einen Durchmesser von etwa 12 bis 16 nm und eine Länge von etwa 800 nm auf.

Die leitfähigen Bakterienpili 22 werden in Kombination mit Leitruß 20 verwendet, um Punkt-zu-Punkt- und Linie-zu-Punkt-Leitfähigkeit in der Elektrodenpaste 10 zu erzielen. Die Leitadditive 20, 22 unterstützen hierbei den Elektronentransport, und verbessern somit die Leitfähigkeit der Elektrodenpaste 10. Der Elektronentransport ist in der Fig. 2 schematisch anhand von Pfeilen 28a, 28b, 28c dargestellt. Die Pfeile 28a stellen hierbei einen Elektronentransport vom Aktivmaterial 24 zu den Pili 22 dar. Die Pfeile 28b stellen den Elektronentransport entlang der Pili 22 dar, wobei der Pfeil 28c den Elektronentransport entlang der Leitrußaggregate repräsentiert. Durch die Pili 22 ist ein Elektronentransport zwischen dem Aktivmaterial 24 möglich, auch wenn das Leitruß 20 nicht in Kontakt ist.

Zur Verwendung von Bakterienpili 22 als Leitadditiv in einer Elektrodenpaste 10 sind unterschiedliche Prozesse denkbar. Nachfolgend sind anhand der Figuren 3 bis 6 drei erfindungsgemäße Verfahren zur Herstellung einer solchen Elektrodenpaste 10 näher erläutert.

Das erste Verfahren zur Herstellung der Elektrodenpaste 10 ist nachfolgend anhand der Figuren 2 und 3 näher erläutert. In einem nicht näher dargestellten Verfahrensschritt wird zunächst eine Bakterienkultur 30 von Bakterien 32 mit elektrisch leitfähigen oder konduktiven Pili 22 inkubiert. Bei den Bakterien 32 handelt es sich insbesondere um gramnegative anaerobe Bakterien, wie beispielsweise Pseudomonas aeruginosa (P. aeruginosa), Shewanella oneidensis, oder Geobacter sulfurreducens. Beispielsweise werden die Bakterien 32 beziehungsweise die Bakterienkultur 30 in einem Inkubator inkubiert. Die Bakterien 32 und Pili 22 sind in den Figuren lediglich beispielhaft mit Bezugszeichen versehen.

Anschließend werden die Bakterien 32 in eine Salzwasserlösung 34 (Kochsalzlösung) gegeben und einem Vibrations- und Zentrifugationsprozess 36 unterzogen. In der Salzwasserlösung 34 werden die Pili 22 mechanisch von den Bakterien 32 abgetrennt. Während eines nachfolgenden Zentrifugationsprozesses werden die abgetrennten Pili 22, die ein geringes Gewicht als die Zellkörper der Bakterien 32 aufweisen, in der Mitte gesammelt und abgefiltert. Im Zuge der Filterung werden weiterhin kurze oder gebrochene Pili 22 abgetrennt. Schließlich werden die Pili 22 mit destilliertem Wasser gewaschen oder gereinigt. Die Pili 22 weisen hierbei einen Durchmesser von circa 15 nm und eine Länge von etwa 400 nm bis 800 nm auf. Die Pililänge hängt hierbei vom mechanischen Trennverfahren ab, wo-bei eine möglichst große Länge der Pili 22 für eine langreichweitige Leitfähigkeit erwünscht ist.

Anschließend werden die Pili 22 mit dem Leitruß 20 und beispielsweise einem kompressiblen Graphit 38 gemischt. Vorzugsweise werden hierbei etwa 0,5 Gew.-% elektrisch leitfähigen Pili 22 und zwischen 2 Gew.-% und 3 Gew.-% Leitruß 20 sowie etwa 2 Gew.-% Graphit verwendet. Für eine gleichmäßige Verteilung von Leitruß 20 und Pili 22 sowie Graphit 38 wird ein Trockenmischprozess 40 durchgeführt, wobei die Rauheit der Pili-Oberfläche erhöht wird, so dass der Leitruß besser daran haftet. Durch das Trockenmischen wird sichergestellt, dass der Kohlenstoff gleichmäßig auf den Pili anhaftet.

Das resultierende Gemisch 42 wird anschließend in einem Nassmischprozess 44 mit einer Aufschlämmung oder Suspension aus Aktivmaterial 24 und einem Bindemittel 46 sowie einem Lösungsmittel 48 zu der Elektrodenpaste 10 beziehungsweise dem Elektrodenpastenmaterial gemischt. Die konstante Rotation während des Nassmischprozesses 44 verhindert hierbei eine Sedimentation und stellt eine gleichmäßige Verteilung der Pili 22, des Leitruß 20 und des Graphits 38 im Aktivmaterial 24 sicher. Die resultierende Elektrodenpaste 10 wird im Zuge der Elektrodenherstellung auf die Substratfolie des Stromableiters 12 aufgetragen oder extrudiert. Anschließend wird die (Elektrodenpasten-)Beschichtung getrocknet, um das Lösungsmittel 48 zu entfernen.

Das Bindemittel 46 ist beispielsweise Polyvinylidenfluorid PVDF für die Kathode und Styrolbutadien-kautschuk SBR für die Anode. Das Lösungsmittel 48 ist beispielsweise Wasser (für die Anode) oder N-Methyl-2-pyrrolidon (NMP) für die Kathode. Das Aktivmaterial 24 ist hierbei zum Beispiel Graphit für die Anode oder ein Metalloxid, insbesondere ein Lithium-Cobalt-Oxid (LCO), ein Lithium-Nickel-Mangan-Cobalt-Oxid (LNMC, NMC), ein Lithium-Eisenphosphat (LFP), ein Lithium-Nickel-Cobalt-Aluminum-Oxid (NCA) oder dergleichen, für die Kathode.

Der Nassmischprozess 44 erfolgt hierbei vorzugsweise unter einer Stickstoffatmosphäre, mit einem Stickstoffdruck, welcher über dem atmosphärischen Druck gehalten wird. Hierzu wird ein Stickstoffgas 50 in den Mischtank eingeleitet. Beim Mischen der Elektrodenpaste 10 entstehen Gase, welche vorzugsweise durch einen Entgasungsmechanismus 52 entfernt werden.

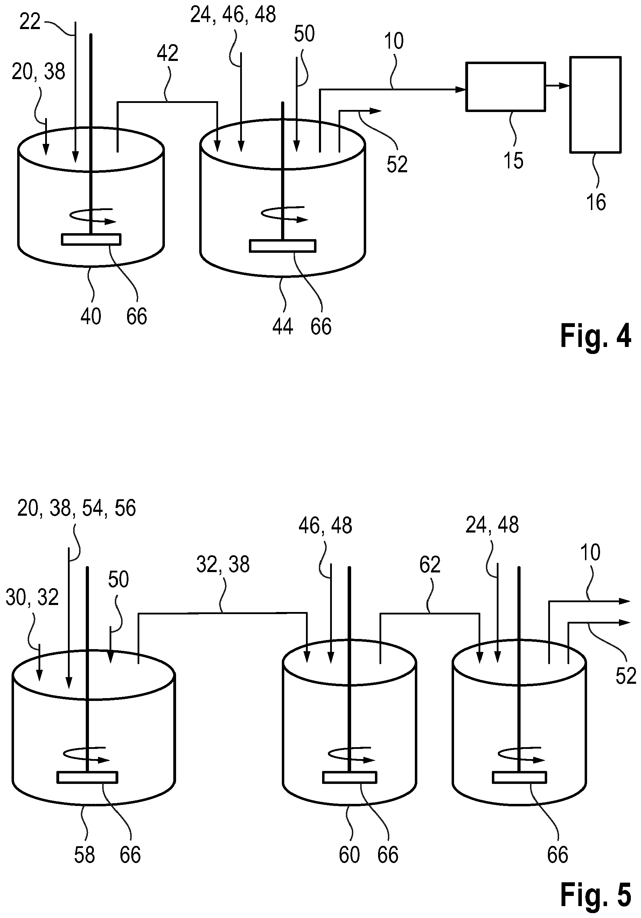

Bei dem in Fig. 5 gezeigten zweiten Verfahren zur Herstellung der Elektrodenpaste 10 wird die Bakterienkultur 30 von Bakterien 32 mit elektrisch leitfähigen Pili 22 mit porösem Graphit 38 inkubiert, so dass die Bakterien 32 das Graphitmaterial bedecken. Der Kohlenstoffbedarf der Bakterien 32 wird somit beispielsweise durch eine Zugabe von Glukose 54 gedeckt, wobei Nitraten 56 als Stickstoffquelle zusätzlich das Bakterienwachstum unterstützen können.

Bei dem zweiten Verfahren werden somit vorzugsweise heterotrophe Anaerobier in Graphit 38 kultiviert, wobei nur wenige Kohlenstoff-Wasserstoff-Bindungen (z. B. Glukose 54) und ggf. Nitrate 56 zugesetzt werden. Die Bakterieninkubation erfolgt hierbei in einem Trockenmischprozess 58 um eine Sedimentation zu verhindern. Für die Bakterieninkubation wird eine sauerstofffreie Atmosphäre aufrechterhalten, in dem der Stickstoffdruck leicht über dem atmosphärischen Druck gehalten wird. Der Stickstoffdruck verhindert das Eindringen von Sauerstoff und Luft in die Inkubationslösung. Das Bakterienwachstum erfolgt beispielsweise bei einer Temperatur von 37 °C, wobei der Trockenmischprozess 58 beispielsweise ein bis zwei Tage dauert, je nach Bakterienart und Menge an Graphit, Glukose und Nitrat.

Das resultierende mit Bakterien 32 beschichtete Graphit 38 wird beispielsweise bei 50 °C getrocknet, um Abfallprodukte wie Alkohol, die während des Zellwachstums entstehen, vor einer Weiterverarbeitung zu entfernen.

Das bakterienbedeckte Graphit 38 wird mit dem Bindemittel 46 und mit dem Lösungsmittel 48 in einem Nassmischprozess 60 zu einer Suspension 62 gemischt. Die Suspension 62 weist hierbei eine möglichst gleichmäßige Dispersion von bakterienbedecktem Graphit 38 im Bindemittel 46 auf.

Die Suspension 62 wird in einen zweiten Nassmischprozess 64 eingeleitet, und mit dem in Lösungsmittel 48 gelösten Aktivmaterial 24 zu der Elektrodenpaste 10 gemischt. Das Nassmischen wird solange durchgeführt, bis eine gleichmäßige Dispersion des Bindemittels 46 und des Lösungsmittels 48 mit dem Aktivmaterial 24 erfolgt und eine erforderliche Viskosität der Elektrodenpaste 10 erreicht wird. Das Mischen erfolgt vorzugsweise in Stickstoffatmosphäre, wobei die beim Mischen entstehenden Gase mittels des Entgasungsmechanismus 52 entfernt werden.

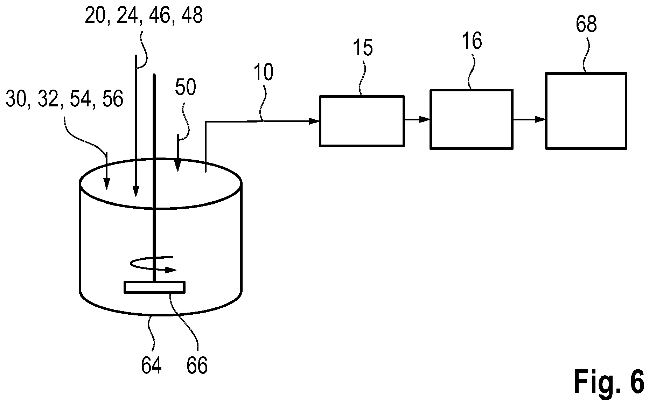

Bei dem in Fig. 6 gezeigten dritten Verfahren zur Herstellung der Elektrodenpaste 10 wird die Bakterienkultur 30 von Bakterien 32 mit elektrisch leitfähigen Pili 22 mit einem Elektrodenpastenmaterial gemischt. Dies bedeutet, dass die Bakterienkultur 30 in eine Aufschlämmung oder Suspension aus Aktivmaterial 24 und Bindemittel 46 sowie Lösungsmittel 48 und gegebenenfalls weiteren Leitadditiven wie Leitruß 20 in einem Nassmischprozess 64 gemischt wird. Anschließend wird die Bakterienkultur 30 in dem Elektrodenpastenmaterial inkubiert, wobei die Bakterienkultur 30 und das Elektrodenpastenmaterial während der Inkubation mittels einer rotierenden Spindel 66 bewegt werden. Dies bedeutet, dass die Bakterien 32 während des Nassmischprozesses 64 inkubiert werden.

In der dritten Variante des Verfahrens, wird die Bakterienkultur 30 somit direkt in die Aufschlämmungs-Lösung der Elektrodenpaste 10 gegeben. Die Bakterien 32 benötigen hierbei in der Aufschlämmung Kohlenstoffnahrung. Die Kohlenstoffnahrung ist beispielsweise in Form von Graphit, welches in dem Aktivmaterial der Anode vorhanden ist. In der Kathode werden etwa 2 Gew.-% poröser Graphit als Bakteriennahrung hinzugefügt. Zusätzliche Glukose 54 und eventuell Nitrate 56 können helfen, das Wachstum der Bakterien 30 weiter zu beschleunigen. Für die beschleunigte Inkubation wird die Aufschlämmung beispielsweise 18 Stunden bei circa 37°C gehalten und durch die rotierende Spindel 66 ständig geschüttelt, um eine Sedimentation zu vermeiden. Da es sich um anaerobe Bakterien 32 handelt, wird im Mischbehälter ein Stickstoffdruck aufrechterhalten, welcher leicht über dem Atmosphärendruck liegt.

Vor dem Extrudierschritt 15 wird die Elektrodenpaste 10 vorzugsweise bei etwa 50 °C getrocknet, um Abfallprodukte wie Alkohol zu entfernen.

Anstelle von Pili 22 wie in dem ersten Verfahren liegen im zweiten und dritten Verfahren die Bakterien 30 in der Aufschlämmung beziehungsweise Elektrodenpaste 10 vor. Die Elektrodenpaste 10 wird bei der Elektrodenherstellung im Trocknungsschritt 16 bei beispielsweise 100°C getrocknet, um das Lösungsmittel 48 zu entfernen. Je nach Bakterienart werden die Bakterien 30 hierbei im Trocknungsschritt 16 abgetötet. Zusätzlich oder alternativ kann dem Trocknungsschritt auch ein zusätzlicher Schritt 68 (Fig. 6) zur Abtötung der Bakterien 30 nachgeschaltet sein, zum Beispiel mittels einer UV-Bestrahlung oder mittels einer Plasmabehandlung (Plasmareinigung) der Elektrodenschicht.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Batterieelektrode
- 4, 6, 8: Verfahrensschritt
- 10: Elektrodenpaste
- 12: Stromableiter
- 14: Elektrodenwickel
- 15: Extrudierschritt
- 16: Trocknungsschritt
- 18: Kalandrierschritt
- 20: Leitadditiv/Leitruß
- 22: Leitadditiv/Pili
- 24: Aktivmaterial
- 26: Trennvorrichtung
- 28a, 28b, 28c: Pfeil
- 30: Bakterienkultur
- 32: Bakterie
- 34: Salzwasserlösung
- 36: Vibrations-/Zentrifugationsprozess
- 38: Graphit
- 40: Trockenmischprozess
- 42: Gemisch
- 44: Nassmischprozess
- 46: Bindemittel
- 48: Lösungsmittel
- 50: Stickstoffgas
- 52: Entgasungsmechanismus
- 54: Glukose
- 56: Nitrat
- 58: Trockenmischprozess
- 60: Nassmischprozess
- 62: Suspension
- 64: Nassmischprozess
- 66: Spindel
- 68: Schritt

## Patentansprüche

1. Verwendung von elektrisch leitfähigen Proteinen als Leitadditiv in einer Elektrodenpaste (10), wobei als Proteine Pili (22) von Bakterien (32) benutzt werden.

2. Verwendung nach Anspruch 1,
**dadurch gekennzeichnet,**
**dass** Pili (22) von gramnegativen anaeroben Bakterien (32) verwendet werden.

3. Verfahren zur Herstellung einer Elektrodenpaste (10),
- wobei eine Bakterienkultur (30) von Bakterien (32) mit elektrisch leitfähigen Pili (22) inkubiert wird,
- wobei die Bakterienkultur (30) mit einer Salzwasserlösung (34) versetzt wird,
- wobei die Pili (22) von den Bakterien (32) mechanisch separiert und mittels Zentrifugieren getrennt werden,
- wobei die abgetrennten Pili (22) mit einem Leitruß (20) zu einem Gemisch (42) gemischt werden,
- wobei das Gemisch (42) mit einem Aktivmaterial (24) und mit einem Bindemittel (46) sowie mit einem Lösungsmittel (28) versetzt, und zu der Elektrodenpaste (10) gemischt wird.

4. Verfahren nach Anspruch 3,
**dadurch gekennzeichnet,**
**dass** die mechanische Separation von Pili (22) und Bakterien (32) mittels Vibration realisiert wird.

5. Verfahren zur Herstellung einer Elektrodenpaste (10),
- wobei in einem Graphitmaterial (38) eine Bakterienkultur (30) von Bakterien (32) mit elektrisch leitfähigen Pili (22) inkubiert wird, so dass die Bakterien (32) das Graphitmaterial (38) bedecken,
- wobei das bakterienbedeckte Graphitmaterial (38) mit einem Bindemittel (46) und einem Lösungsmittel (48) zu einer Suspension (62) gemischt wird,
- wobei die Suspension (62) mit einem Aktivmaterial (24) versetzt, und zu der Elektrodenpaste (10) gemischt wird.

6. Verfahren zur Herstellung einer Elektrodenpaste (10),
- wobei eine Bakterienkultur (30) von Bakterien (32) mit elektrisch leitfähigen Pili (22) mit einem Elektrodenpastenmaterial gemischt wird,
- wobei die Bakterienkultur (30) in dem Elektrodenpastenmaterial inkubiert wird, und
- wobei die Bakterienkultur (30) und das Elektrodenpastenmaterial während der Inkubation mittels einer rotierenden Spindel (66) bewegt werden.

7. Verfahren nach Anspruch 6,
**dadurch gekennzeichnet,**
**dass** dem Elektrodenpastenmaterial zusätzlich zu der Bakterienkultur ein Leitruß beigemischt wird.

8. Verfahren nach einem der Ansprüche 3 bis 7,
**dadurch gekennzeichnet,**
**dass** die Inkubation der Bakterienkultur (30) in einem Tank mit Stickstoffatmosphäre durchgeführt wird, in welchem der Stickstoffdruck über dem atmosphärischen Druck gehalten wird.

9. Verfahren nach einem der Ansprüche 3 bis 8,
**dadurch gekennzeichnet,**
**dass** entstehende Gase mittels eines Entgasungsmechanismus (52) entfernt werden.

10. Batteriezelle, insbesondere für eine Fahrzeugbatterie, aufweisend mindestens eine Batterieelektrode, welche aus einer nach einem der Ansprüche 2 bis 9 hergestellten Elektrodenpaste hergestellt ist.
